(19) Europäisches Patentamt
European Patent Office
Office européen des brevets

(11) Publication number: **0 262 772 B1**

(12) # EUROPEAN PATENT SPECIFICATION

(45) Date of publication of patent specification: **03.07.91**

(51) Int. Cl.5: **C09D 5/44**, C09D 163/00

(21) Application number: **87306943.9**

(22) Date of filing: **05.08.87**

(54) **Cathode-depositing electrodeposition coating composition.**

(30) Priority: **06.08.86 JP 185848/86**
**30.09.86 JP 234094/86**

(43) Date of publication of application:
**06.04.88 Bulletin 88/14**

(45) Publication of the grant of the patent:
**03.07.91 Bulletin 91/27**

(84) Designated Contracting States:
**DE FR GB IT SE**

(56) References cited:
**EP-A- 0 094 788**
**EP-A- 0 141 601**
**EP-A- 0 159 883**
**EP-A- 0 162 613**

**PATENT ABSTRACTS OF JAPAN, vol. 10, no. 98 (C-339)[2155], 15th April 1986; & JP-A-60 229 968 (NIPPON SEKIYU K.K.) 15-11-1985**

(73) Proprietor: **Nippon Paint Co., Ltd.**
**2-1-2, Oyodokita Oyodo-ku**
**Osaka-shi Osaka-fu(JP)**

Proprietor: **NIPPON OIL CO. LTD.**
**3-12, Nishi Shinbashi 1-chome**
**Minato-ku Tokyo(JP)**

(72) Inventor: **Tsuchiya, Yasuyuki**
**3-8-23 Kuzuha Asahi**
**Hirakata-shi Osaka-fu(JP)**
Inventor: **Ito, Kohji**
**3-2-2-607 Shirakawa**
**Ibaraki-shi Osaka-fu(JP)**
Inventor: **Nishikawa, Shigeo**
**384-2 Taimacho Ohta Kitakatsuragi-gun**
**Nara-ken(JP)**
Inventor: **Inoue, Tsuyoshi**
**2-1-45 Suimeidei**
**Kawanishi-shi Hyogo-ken(JP)**
Inventor: **Otsuki, Yutaka**
**332-4 Nobacho Konan-ku**
**Yokohama-shi Kanagawa-ken(JP)**
Inventor: **Araki, Yoshihiko**
**4-10-13 Minamiyukigaya**
**Ota-ku Tokyo(JP)**

(74) Representative: **Holmes, Michael John et al**
**Frank B. Dehn & Co. European Patent Attorneys Imperial House 15-19 Kingsway**
**London, WC2B 6UZ,(GB)**

**EP 0 262 772 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to an electrodeposition coating composition of cathode-depositing type.

Certain types of resins having basic groups are dissociated into positively charged resin particles in an aqueous solution or dispersion thereof. When electrodepositing the solution or dispersion, these resins are deposited on the cathode. Cathode-depositing electrodeposition coating compositions have an important advantage over anode-depositing coating compositions containing a neutralizate of acid group-bearing resins in that the former eliminates the defects of the latter, i.e., dissolution of metallic substrates into the coating bath and other problems associated therewith.

It is known that a cathode-depositing electrodeposition coating composition may be prepared by introducing amino groups into carbon-to-carbon double bond-containing synthetic polymers such as liquid polybutadiene polymers and then neutralizing with an acid. See, Japanese Laid Open Patent Application Nos. 5l-ll9727, 52-l47638 and 53-l6048.

This composition produces a cured film having excellent properties mainly through oxidative polymerization of unsaturated bonds possessed by the resin. This composition, however, requires relatively high baking temperatures when the coating film thereof is cured within a practical length of time. Low baking temperatures may be achieved by adding a drier compound such as water-soluble manganese salts. See, Japanese Laid Open Patent Application No. 53-l42444. In this case, relatively large amounts of drier compound must be added. As a result, electrodeposition characteristics of the coating composition, such as capability of forming smooth and uniform films on the substrate are often impaired.

Low baking temperatures may also be achieved by introducing acrylic or methacrylic double bonds into the resin. See, Japanese Laid Open Patent Application No. 56-l5l777. In this case, a cathode-depositing electrodeposition coating composition which forms a cured film having excellent properties at a baking temperature as low as l60 °C may be obtained by incorporating an amount of water-soluble manganese salts.

Despite these and other attempts, the prior art electrodeposition coating compositions of the above type still have various problems. Since the oxidative polymerization reaction of unsaturated film-forming polymers takes place first from the surface of the resulting film, winkles are often formed or the interior of the film is not fully cured.

U.S. Patent No. 4,579,886 to Otsuki et al assigned to the assignees of this application proposes to incorporate a blocked polyisocyanate compound to the cathodic electrodeposition coating compositions of the above type so as to achieve uniform curing of the coating film without forming winkles.

## SUMMARY OF THE INVENTION

It is a principal object of this invention of provide a cathodic electrodeposition coating composition containing amine-modified epoxidized diene polymers which cures uniformly to give a smooth film on a substrate.

It is another object of this invention to provide the cathodic electrodeposition coating composition which incorporates a crosslinking agent other than blocked polyisocyanate compounds.

Other objects and advantages of this invention will become apparent to those skilled in the art as the description proceeds.

According to the present invention, there is provided a cathode-depositing electrodeposition coating composition rendered water-soluble or water-dispersible by neutralization with an organic acid and which comprises an aqueous solution or dispersion containing:

(A) 100 parts by weight of a reaction product produced by reacting

(1) a polymer having a molecular weight from 500 to 5,000, a carbon-to-carbon double bond content corresponding to an iodine number from 50 to 500 and an oxirane oxygen content from 3 to l2% by weight, with

(2) 30 to 300 millimoles per l00g of said reactant (l) of an amine of the formula:

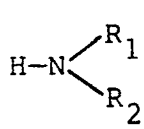

wherein $R_1$ and $R_2$ each represents a $C_1$-$C_{20}$ hydrocarbon radical or a corresponding radical

substituted by a hydroxyl group, or $R_1$ and $R_2$ represent, taken together with the nitrogen atom, a saturated or unsaturated ring system, or by reacting the aforesaid reaction product of (l) and (2) with (3) 0 to 200 millimoles per l00g of said reactant (l) of an α,β-unsaturated carboxylic acid of the formula:

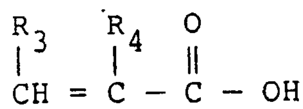

wherein $R_3$ and $R_4$ each represents a hydrogen atom or methyl group, an unsaturated aliphatic acid having a molecular weight from l00 to 350 and a conjugated carbon-to-carbon double bond content of at least l0% by weight, or a mixture thereof;

(B) l0 to l00 parts by weight of a reaction product of

(l) a diglycidyl compound of the formula:

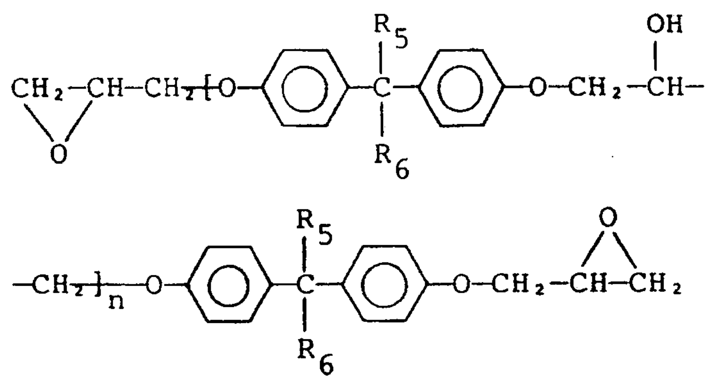

wherein $R_5$ and $R_6$ each represents a hydrogen atom or methyl group, and n is zero or an integer from 1 to 20; and

(2) 1.9 to 2.1 moles per mole of said glycidyl compound (1) of an α,β-unsaturated carboxylic acid of the formula:

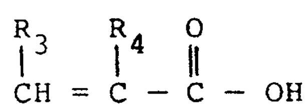

wherein $R_3$ and $R_4$ are as defined above, an unsaturated aliphatic acid having a molecular weight from 100 to 350 and a conjugated carbon-to-carbon double bond content of at least 10% by weight, or a mixture thereof;

(C) 2 to 30 parts by weight of an aminoplast resin or a polyester having a molecular weight from 500 to 5,000 and produced by reacting a low molecular weight polybasic organic acid component with a low molecular weight polyol component or a monoepoxy compound; and

(D) 0.005 to 1.0 parts by weight calculated as elementary metal of manganese dioxide, an organic acid salt of manganese, cobalt, copper or lead, or a mixture thereof.

The composition may further comprise, as component (E), less than 30 parts by weight of a $C_6$-$C_{24}$ unsaturated monocarboxylic acid, a dimer thereof, or a reaction product produced by reacting (1) a polymer having a molecular weight from 500 to 5,000 and a carbon-to-carbon double bond content corresponding to an iodine number of 50 to 500 with (2) 40 to 400 millimoles per l00g of said polymer (l) of an α,β-unsaturated dicarboxylic acid anhydride of the formula:

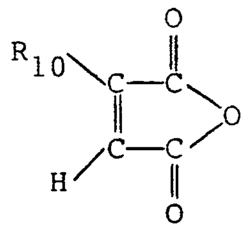

wherein $R_{10}$ represents a hydrogen atom, a halogen atom or methyl group, or a half ester or half amide of the aforesaid reaction product.

By incorporating component (C), i.e. the aminoplast resin or polyester, the coating composition of the invention gives a cured film which is much smoother than the corresponding film free from the component (C).

DETAILED DISCUSSION

Component (A)

The starting unsaturated polymer having a molecular weight from 500 to 5,000 and an iodine number from 50 to 500 used for the preparation of reactant (I) of component (A) may be prepared by any known method. Typically, the polymer is prepared using the anion polymerization technique by polymerizing a $C_4$-$C_{10}$ conjugated diolefin, a mixture of such diolefins or a mixture of said diolefin with less than 50 mole % of an aromatic vinyl monomer such as styrene, α-methylstyrene, vinyltoluene or divinylbenzene at a temperature from 0° C to l00° C in the presence of a catalyst such as an alkali metal or an organic alkali metal compound. Relatively low molecular weight polymers having a pale color and a minimum gel content are preferable. Preferable polymerization methods include one using an organic alkali metal catalyst such as benzyl sodium and an alkyl arene chain transfer agent such as toluene as disclosed in U.S. Patent 3,789,090, the living polymerization method using an alkali metal catalyst such as sodium and a polycyclic aromatic activating agent such as naphthalene in tetrahydrofuran as disclosed in Japanese Patent Publication Nos. 42-l7485 and 43-27432, and one using a dispersion of alkali metal as catalyst and an ether such as dioxane as molecular weight regulating agent as disclosed in Japanese Patent Publication Nos. 32-7446, 38-l245 and 34-l0l88. Also included in examples of preferred polymerization methods is the coordinated anion polymerization method using acetylacetone complex of an element of group VIII of the periodical table such as cobalt or nickel, or an alkylalminum halide complex as disclosed in Japanese Patent Publication Nos. 45-507 and 46-80300.

The starting polymer is epoxidized to reactant (I) having an oxirane oxygen content from 3 to l2% by weight by the known method using peroxy compounds such as hydrogen peroxide or peroxy acids.

Reactant (I) is reacted with reactant (2) and optionally further with reactant (3) to give component (A). Reactant (2) is an amine of the formula:

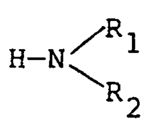

wherein $R_1$ and $R_2$ are as defined above. Examples thereof include aliphatic amines such as dimethylamine or diethylamine, alkanol amines such methyl ethanolamine or diethanolamine, and heterocyclic amines such as morpholine or piperidine. The reaction may be carried out at a temperature from 50° C to 200° C in the presence or absence of a diluent. The amount of reactant (2) ranges from 30 to 300 millimoles, preferably from 50 to 200 millimoles per l00g of reactant (I).

Reactant (3) is an α,β-unsaturated carboxylic acid of the formula:

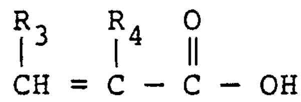

wherein $R_3$ and $R_4$ are as defined above, an unsaturated aliphatic acid having a molecular weight from l00 to 350 and a conjugated carbon-to-carbon double bond content of at least l0% by weight, or a mixture thereof.

Examples of $\alpha,\beta$-unsaturated carboxylic acids include acrylic or methacrylic acid. Examples of unsaturated aliphatic acids include sorbic acid, Chinese tung oil fatty acid, sunflower oil fatty acid, dehydrated castor oil fatty acid and the like. Isomerized soybean or linseed oil fatty acid, purified oleostearic acid, purified conjugated linoleic acid, and mixtures of unsaturated aliphatic acids having a total conjugated carbon-to-carbon content of at least l0% by weight may also be used. Dehydrated castor oil fatty acid is most preferable because it is commercially available in a large quantity. The reaction may be carried out at a temperature from l00°C to 200°C. The amount of reactant (3) ranges from less than 200 millimoles, preferably from 50 to l50 millimoles per l00g of said reactant (l).

Component (B)

Component (B) may be prepared by reacting a diglycidyl compound of the formula:

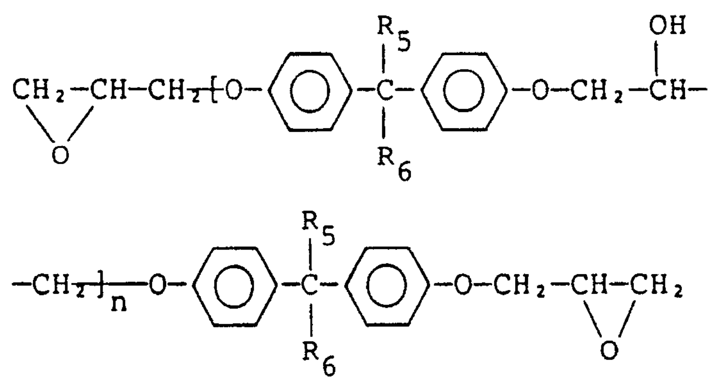

wherein all symbols are as defined above, with l.9 to 2.l moles per mole of the diglycidyl compound of $\alpha,\beta$-unsaturated carboxylic acid, unsaturated aliphatic acid or their mixture specified as reactant (3) of component (A).

The diglycidyl compound is well-known in the art and is conventionally prepared by reacting bisphenol with epichlorhydrin in the presence of an alkali. Examples of starting bisphenols include 2,2-bis(4′-hydroxyphenyl)propane, l,l-bis(4′-hydroxyphenyl)ethane, and bis(4′-hydroxyphenyl)methane. The reaction product may be further reacted with bisphenol and then epichlorhydrin to obtain higher molecular weight diglycidyl compounds.

The reaction of diglycidyl compound with $\alpha,\beta$-unsaturated carboxylic acid, unsaturated aliphatic acid or their mixture may be carried out at a temperature from 0°C to 200 °C, preferably from 50°C to l50°C preferably in the presence of 0.0l to l.0% of a radical polymerization inhibitor such as hydroquinon, methoquinone or N-phenyl-N′-isopropyl-p-phenylenediamine and a catalyst such as tertiary amines or quaternary ammonium salts. The reaction may be carried out in the presence or absence of a solvent. However, it is practically advantageous to use an amount of inert solvents such as ethylcellosolve acetate or methyl isobutyl ketone. After the reaction, the solvent need not be removed and component (B) containing the solvent may be admixed with other components to give final electrodeposition coating compositions.

Care should be taken in this reaction that substantially all epoxide groups have been converted to a group of

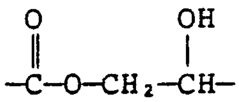

and no epoxide group remains unreacted. The presence of a large number of unreacted epoxide groups will cause gellation or otherwise undesirable problems when component (B) is admixed with component (A) in the final formulation. For example, the unreacted epoxide group reacts with a basic group present in component (A) to produce a reaction product which is relatively insoluble in water or unstable in an aqueous system upon storage. Thus the desired electrodeposition characteristics of the resulting coating composition may be greatly impaired.

Component (B) is incorporated for the purpose of improving anticorrosive properties of the resulting coating film. The amount of component (B) in the final composition ranges between l0 and 200 parts by weight, preferably between 30 and l00 parts by weight per l00 parts by weight of component (A). Excessive use may decrease solubility or dispersibility of the entire components in water.

Component (C)

Component (C) may be either an aminoplast resin or a polyester having a molecular weight from 500 to 5,000.

Examples of aminoplast resins include formaldehydecondensates of urea (including substituted ureas) or triazine compounds such as melamine, benzoguanamine or acetoguanamine. These condensates may be used in the form of methylol compounds as well as in the form of partially or completely etherified products with a $C_1$-$C_6$ alkanol such as methanol or butanol. Melamine-formaldehyde condensates and their etherified products are preferable. These aminoplast resins are well-known in the coating industry and may be prepared by the conventional methods.

Polyester resins or oligomers having a molecular weight from 500 to 5,000 may be prepared, as is well-known, by reacting a low molecular weight polybasic organic acid component with a low molecular weight polyol component.

Examples of the polybasic organic acid component include aromatic polycarboxylic acids such as trimellitic acid, its anhydride, phthalic acid, its anhydride or isophthalic acid; and aliphatic polycarboxylic acid such as malonic acid, adipic acid, azelaic acid, fumaric acid, maleic anhydride or itaconic anhydride.

Examples of the polyol components include aliphatic polyols such as ethylene glycol, propylene glycol, neopentyl glycol, l,4-butanediol, trimethylolpropane, glycerine or pentaerythritol, and monoepoxide compounds such as styrene oxide, phenyl glycidyl ether or glycidyl versatate.

The polyesters used as component (C) are prepared by reacting the polybasic acid component with the polyol component at a COOH:OH ratio of 0.9 to l.0 at a temperature from l20° C to 220° C to give an acid number less than 5.
The monoepoxide compound should be counted as having two hydroxyl groups per molecule.

By incorporating component (C), surface smoothness, anticorrosive and evenly curing characteristics of the resulting electrodeposition coating composition may be greatly improved. Component (C) is incorporated into the final composition in an amount from 2 to 30 parts, preferably from 5 to 20 parts by weight per l00 parts by weight of component (A). When the amount is too small, the improvement of film characteristics is not significant. Conversely, excessive amounts may decrease the corrosion resistance of the film and also increase weight loss upon baking.

Component (D)

Manganese dioxide and various organic acid salts of manganese, cobalt, copper or lead may be incorporated to the coating composition of this invention. Examples of organic acid salts include water-soluble salts such as formate, acetate and lactate; and oil-soluble salts such as naphthenate and octoate. Corresponding metal salts of a l,2-dicarboxylic acid monoester of the formula:

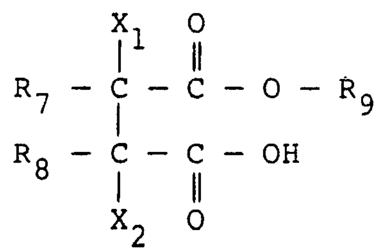

wherein $R_7$ and $R_8$ each represents a hydrogen atom or $C_1$-$C_{20}$ alkyl group, or $R_7$ and $R_8$ represent, taken together with the adjacent carbon atoms, a saturated or unsaturated six-membered monocyclic heterocycle or fused heterocycle of five-membered and six-membered cycles; $R_9$ represents a hydrocarbon group of I to 20 carbon atoms which may be interrupted by an ether linkage or ester linkage; and $X_1$ and $X_2$ each represents an organic group of I to I0 carbon atoms or a single bond forming a double bond between the carbon atoms to which they are attached, may also be used.

Component (D) is used in an amount from 0.005 to I.0 parts, preferably 0.0I to 0.5 parts by weight per I00 parts of component (A) as elementary metal. Too small amounts are not effective, whereas excessive amounts decrease the water-dispersibility and anticorrosive property of the resulting coating composition.

Component (E)

Examples of $C_6$-$C_{24}$ unsaturated monocarboxylic acid include purified unsaturated fatty acids such as Chinese tung oil fatty acid, linseed oil fatty acid, sunflower oil fatty acid, soybean oil fatty acid, dehydrated castor oil fatty acid, castor oil fatty acid, safflower oil fatty acid, tall oil fatty acid, oleic acid, linoleic acid, linolenic acid, oleostearic acid, tallow fatty acid or fish oil fatty acid; conjugated unsaturated fatty acid such as isomerized sunflower oil fatty acid or isomerized dehydrated castor oil; non-fatty unsaturated monocarboxylic acid such as sorbic acid or cinnamic acid. Also included are cyclic unsaturated monocarboxylic acid such as abietic acid or pimaric acid derived from natural rosin, as well as synthetic drying oil fatty acid such as HIDIENE sold by Soken Kagaku Co., Ltd. Examples of dimers of the unsaturated monocarboxylic acid include dimer rosin and dimer acid derived from tall oil fatty acid. Mixtures of two or more unsaturated monocarboxylic acid and/or dimers may also be used.

Component (E) may be a reaction product produced by reacting (I) a polymer having a molecular weight from 500 to 5,000, a carbon-to-carbon double bond content corresponding to an iodine number of 50 to 500 with (2) 40 to 400 millimoles per I00g of said polymer (I) of an $\alpha,\beta$-unsaturated dicarboxylic acid anhydride of the formula:

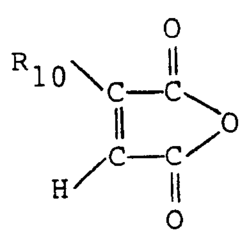

wherein $R_{10}$ is as defined above.

Examples of reactant (I) are naturally occurring drying oils such as linseed oil, Chinese tung oil or dehydrated castor oil as well as synthetic drying oil such as liquid polybutadiene.

Examples of reactant (2) are maleic anhydride, chloromaleic anhydride and citraconic anhydride.

Maleinized polybutadiene and maleinized linseed oil are typical examples of the reaction product. Half esters and half amides of the reaction product with a lower alkanol or a lower aliphatic primary or secondary amine may also be used. Component (E) may be a mixture of the aforesaid unsaturated monocarboxylic acid or dimer and the aforesaid reaction product of reactant (I) and (2) or derivatives thereof.

The addition of component (E) is optional but desirable in an amount less than 30 parts, more preferably less than I0 parts by weight per I00 parts of component (A) to improve the surface smoothness and curing property of the finished film of the composition of this invention. However, excessive amounts tend to decrease corrosion resistance and thus should be avoided.

Formulation of Coating Composition

The coating composition of the present invention is prepared by dissolving or dispersing components (A), (B), (C), (D) and optionally (E) in a suitable amount of an aqueous medium. In order to render the mixture of these components easily water-soluble or water-dispersible, it is preferable to neutralize the mixture with 0.l to 2.0, preferably 0.2 to l.0 equivalents per equivalent of amino groups of component (A) of a water-soluble organic acid such as acetic acid, propionic acid, lactic acid and the like.

When dissolving or dispersing the mixture in water, a water-miscible organic solvent may be added to water or to the mixture of components for improving the stability or fluidity of the solution or dispersion of the mixture. This also improves the smoothness of the resulting coating film. Examples of such solvents include ethylcellosolve, propylcellosolve, butylcellosolve, ethylene glycol dimethyl ether, diethylene glycol dimethyl ether, diacetone alcohol, 4-methoxy-4-methylpentanone-2, methyl ethyl ketone and the like. The solvent may be used in an amount from l0 to l00 parts by weight per l00 parts by weight of total solid contents of the mixture of components (A) to (E).

The electrodeposition coating composition of this invention may further contain conventional pigments such as ferric oxide, lead oxide, basic lead silicate, strontium chromate, carbon black, titanium dioxide, talc, aluminum silicate, precipitated barium sulfate and the like. These pigments may be incorporated as such or in the form of a master batch prepared by mixing a large amount of pigment with a portion of solution or dispersion of neutralized component (A). Other conventional additives may also be incorporated as desired.

The invention is further illustrated by the following examples in which all parts and percents are by weight.

Production Example l

NISSEKI polybutadiene B-2000 ($\overline{Mn}$ = 2,000, l,2-vinyl = 65%) was epoxidized with peracetic acid to obtain an epoxidized polybutadiene having an oxirane oxygen content of 6.4%.

l,000g of the epoxidized polybutadiene, 354g of ethylcellosolve and 62.lg of dimethylamine were reacted in a 2 liter autoclave at l50 °C for 5 hours. After unreacted dimethylamine was distilled off the residue was cooled to l20 °C. A mixture of 79.3g of acrylic acid, 7.6g of hydroquinone and 26.4g of ethylcellosolve was added to the residue and reacted therewith at l20 °C for 3 3/4 hours.

Component ($A_1$) having an amine number of 85.2 millimoles/l00g, an acid number of l0.0 millimoles/l00g, and a solid content of 75.0% was obtained.

Production Example 2

NISSEKI polybutadiene B-l800 ($\overline{Mn}$ = l,800, l,2-vinyl = 64%) was epoxidized with peracetic acid to obtain an epoxidized polybutadiene having an oxirane oxygen content of 6.5%.

l,000g of the epoxidized polybutadiene, 377g of ethylcellosolve and l3l.0g of methyl ethanolamine were reacted in a 3 liter separable flask at l70 °C for 6 hours. After the reaction, the reaction mixture was cooled to l20 °C. A mixture of l40.0g of dehydrated castor oil fatty acid, 8.8g of hydroquinone and 6l.lg of ethylcellosolve was added to the flask and reacted at l50 °C for 2 hours. The reaction mixture was cooled again to l20 °C. 43.2g of acrylic acid was added and reacted at l20 °C for 4 hours.

Component ($A_2$) having an amine number of 99.0 millimoles/l00g, an acid number of 9.9 millimoles/l00g, and a solid content of 75.0% was obtained.

Production Example 3

NISSEKI polybutadiene B-l800 was epoxidized with hydrogen peroxide in the presence of formic acid catalyst to obtain an epoxidized polybutadiene having an oxirane oxygen content of 6.7%.

l,000g of the epoxidized polybutadiene, 357g of ethylcellosolve and 74.6g of dimethylamine were reacted in an 3 liter autoclave at l50 °C for 5 hours. After unreacted dimethylamine was distilled off, the reaction mixture was cooled to l20 °C. A mixture of l40g of synthetic drying oil fatty acid (HIDIENE, Soken Kagaku Co., Ltd.), 8.4g of hydroquinone and 6l.lg of ethylcellosolve was added and reacted at l50 °C for 2 hours. After the reaction, the reaction mixture was cooled again to l20 °C. 43.2g of acrylic acid was added and reacted at l20 °C for 4 hours.

Component ($A_3$) having an amine number of 93.6 millimolles/l00g, an acid number of 9.8 millimoles/l00g, and a solid content of 75.0% was obtained.

Production Example 4

1,000g of bisphenol A epoxy resin (EPIKOTE 1004, epoxy equivalent=950, Yuka Shell Epoxy Co., Ltd.) was dissolved in 343g of ethylcellosolve. To the solution was added a mixture of 76.3g of acrylic acid, 10g of hydroquinone and 5g of N,N-dimethylaminoethanol. The mixture was reacted at 100°C for 5 hours to obtain a solution of component ($B_1$).

Production Example 5

1,000g of bisphenol A epoxy resin (EPIKOTE 1001, epoxy equivalent=485, Yuka Shell Epoxy Co., Ltd.) was dissolved in 400g of ethylcellosolve acetate. To the solution was add a mixture of 145.6g of dehydrated castor oil fatty acid, 111.6g of acrylic acid, 10g of hydroquinone and 5g of N,N-dimethylaminoethanol. The mixture was reacted at 100°C for 5 hours to obtain a solution of component ($B_2$) having an acid number 2 millimoles/100g and a solid content of 75%.

Production Example 6

1,000g of NISSEKI polybutadiene B-700 ($\overline{Mn}$=700, 1,2-vinyl=52%), 163g of maleic anhydride, 1g of ANTIGEN 6C (Sumitomo Chemical Industry Co., Ltd.) and 10g of xylene were added to a 2 liter separable flask having a reflux condenser attached thereto. The mixture was reacted at 195°C for 5 hours under nitrogen gas current. Unreacted maleic anhydride and xylene were distilled off in vacuo to obtain malleinized polybutadiene having an acid number of 143 millimoles/100g.

500g of the maleinized polybutadiene was reacted with 70.6g of ethylcellosolve at 120°C for 2 hours to open the acid anhydride ring. A half ester of maleinized polybutadiene ($E_2$) was obtained.

Production Example 7

1,000g of trimellitic anhydride and 832g of phenyl glycidyl ether were placed in a 5 liter separable flask and heated to 100°C with stirring. Then the reaction was continued at 130°C for 30 minutes while controlling the exothermic reaction. After raising the temperature to 140°C, 10g of dimethylaminoethanol and 832g of phenyl glycidyl ether were added. The reaction was continued at 150°C for additional 1.5 hours. After cooling, the reaction mixture was dissolved in 888g of ethylcellosolve to give a solution ($C_3$) having an acid number of 1.5 millimoles/100g and a solid content of 75%.

Production Example 8

1,000g of trimellitic anhydride and 1,350g of glycidyl versatate (CARDURA E 10, Yuka Shell Epoxy Co., Ltd.) were heated in a 5 liter separable flask to 100°C with stirring. Then the reaction was continued at 140°C for 30 minutes while controlling the exothermic reaction. Then 15g of dimethylbenzylamine and 600g of allyl glycidyl ether were added. Then the temperature was raised to 150°C and the reaction continued at this temperature for additional 1.5 hours. After cooling, the reaction mixture was dissolved in 985g of ethylcellosolve to give a solution ($C_4$) having an acid number of 1.0 millimole/100g and a solid content of 75%.

Production Example 9

1,000g of NISSEKI polybutadiene B-700 ($\overline{Mn}$=700, 1,2-vinyl=52%), 117.3g of maleic anhydride, 1g of ANTIGEN 3C and 10g of xylene were added to a 2 liter separable flask having a reflux condenser attached thereto. The mixture was reated at 195°C for 5 hours under nitrogen gas current. Unreacted maleic anhydride and xylene were distilled off. A maleinized polybutadiene having an acid number of 107 millimoles/100g was obtained.

500g of the maleinized polybutadiene was reacted with 148g of ethylcellosolve at 120°C for 2 hours. The product was cooled to room temperature and neutralized with 100g of a 22.5% aqueous solution of sodium hydroxide. A quantity of deionized water was added to the neutralizate to make an aqueous solution of maleinized polybutadiene having a solid content of 25%.

To a solution of 74.5g of manganese sulfate ($MnSO_4 \cdot 4H_2O$) in a mixture of 600g of water, 600g of isopropanol and 1,000g of benzene was added 2,192g of the aqueous solution of maleinized polybutadiene dropwise at room temperature. After the addition, the mixture was heated at 60°C for 30 minutes and then

allowed to stand. The reaction mixture separated into two phases. The lower layer was discarded. The upper layer was heated in l,000g of deionized water at 60° C for 30 minutes and allowed to stand for l hour. The lower layer was discarded again and the upper layer was distilled in vacuo to remove benzene and other volatile solvents. The residue was dissolved in ethylcellosolve to a solid content of 75% to give a solution of manganese salt of maleinized polybutadiene ($D_1$) having a manganese concentration of 2% as elementary manganese.

Example l

400g of component ($A_1$) produced in Production Example l, 240g of component ($B_1$) produced in Production Example 4 and 48g of NIKALAC MX-45 (melamine resin sold by Sanwa Chemical Co., Ltd.) as component ($C_1$) were thoroughly mixed and neutralized with 8.lg of acetic acid with stirring. The mixture was diluted with deionized water to give an aqueous solution having a solid content of 20%.

2,000g of this solution, 4g of carbon black, 20g of basic lead silicate and 2,000g of glass beads were placed in a 5 liter stainless steel beaker and vigorously mixed by a high speed rotary mixer for 2 hours. The mixture was filtered to remove glass beads and the filtrate was diluted to a solid content of l6.5% with deionized water containing 0.32g of manganese acetate calculated as elementary manganese.

Electrodeposition coating was carried out using the resulting coating composition on a zinc phosphate-treated steel plate. The steel plate was used as cathode and a carbon electrode was used as anode. The results obtained are shown in Table l.

Example 2

The procedure of Example l was repeated except that the amount of component ($C_1$) was increased to 96g. The results obtained are shown in Table l.

Comparative Example l

The procedure of Example l was repeated except that component ($C_1$) was not incorporated at all. The results obtained are shown in Table l.

Comparative Example 2

The procedure of Example l was repeated except that the amount of component ($C_1$) was increased to 256g. The results obtained are shown in Table l.

Example 3

400g of component ($A_2$) produced in Production Example 2, 400g of component ($B_2$) produced in Production Example 5 and 80g of YUBAN l20 (melamine resin sold by Mitsui Toatsu Chemicals, Inc.) as component ($C_2$) were thoroughly mixed and neutralized with 9.6g of acetic acid with stirring. The mixture was diluted with deionized water to give an aqueous solution having a solid content of 25%.

l,000g of this solution, 2.5g of carbon black, 25g of basic lead silicate and l,000g of glass beads were placed in a 3 liter stainless steel beaker and vigorously mixed by a high speed rotary mixer for 2 hours. The mixture was filtered to remove glass beads and the filtrate was diluted to a solid content of l8% with deionized water containing 0.l3g of manganese acetate calculated as elementary manganese.

Electrodeposition coating was carried out using the resulting coating composition on a zinc phosphate-treated steel plate. The steel plate was used as cathode and a carbon electrode was used as anode. The results obtained are shown in Table l.

Example 4

400g of component ($A_3$) produced in Production Example 3, 400g of component ($B_2$) produced in Production Example 5, 80g of component ($C_2$) (YUBAN l20 used in Example 3) and 44g of component ($D_1$) produced in Production Example 9 were thoroughly mixed and neutralized with 9.0g of acetic acid with stirring. The mixture was diluted with deionized water to give an aqueous solution having a solid content of 30%.

l,000g of this solution, 3g of carbon black, 20g of basic lead silicate and l,000g of glass beads were

vigorously stirred in a 3 liter stainless steel beaker for 2 hours using a high speed rotary mixer. The mixture was filtered to remove glass beads and the filtrate was diluted to a solid content of l6% with deionized water containing 0.l5g of manganese acetate calculated as elementary manganese.

Electrodeposition coating was carried out using the resulting coating composition on a zinc phosphate-treated steel plate. The steel plate was used as cathode and a carbon electrode was used as anode. The results obtained are shown in Table l.

Comparative Example 3

The procedure of Example 3 was repeated except that component ($C_2$) was not incorporated at all. The results obtained are shown in Table l.

Comparative Example 4

The procedure of Example 4 was repeated except that component ($C_2$) was not incorporated at all. The results obtained are shown in Table l.

Example 5

400g of component ($A_1$) produced in Production Example l, 400g of component ($B_1$) produced in Production Example 4, 48g of NIKALAC MX-45 as component ($C_1$) and 60g of dehydrated castor oil fatty acid as component ($E_1$) were thoroughly mixed and neutralized with 6.lg of acetic acid with stirring. The mixture was diluted with deionized water to give an aqueous solution having a solid content of 20%.

2,000g of this solution, 4g of carbon black, 20g of basic lead silicate and 2,000g of glass beads were placed in a 5 liter stainless steel beaker and vigorously mixed by a high speed rotary mixer for 2 hours. The mixture was diluted to a solid content of l6.5% with deionized water containing 0.32g of cobalt acetate calculated as elementary cobalt.

Electrodeposition coating was carried out using the resulting coating composition on a zinc phosphate-treated steel panel used as cathode. The results obtained are shown in Table l.

Table 1

| | Example 1 | Example 2 | Comparative Example 1 | Comparative Example 2 |
|---|---|---|---|---|
| Formulation | | | | |
| Component (A) | ($A_1$) | ($A_1$) | ($A_1$) | ($A_1$) |
| (g) | 400 | 400 | 400 | 400 |
| Component (B) | ($B_1$) | ($B_1$) | ($B_1$) | ($B_1$) |
| (g) | 240 | 240 | 240 | 240 |
| Component (C) | ($C_1$) | ($C_1$) | — | ($C_1$) |
| (g) | 48 | 96 | — | 288 |
| Component (D) | $Mn(Ac)_2$ | $Mn(Ac)_2$ | $Mn(Ac)_2$ | $Mn(Ac)_2$ |
| (g) | 1.0 | 1.0 | 1.0 | 1.0 |
| Baking temp. (°C) for 20 minutes | 165 | 165 | 165 | 165 |
| Film thickness (μ) | 20 | 20 | 20 | 20 |
| Weight loss upon baking, (%) 1) | 1.0 | 1.6 | 0.5 | 1.2 |
| Film testing 2) | | | | |
| Pencil hardness | 2H | H | 2H | 6B |
| Solvent resistance 3) | ○ | ○ | ○ | × |
| Corrosion resistance for 500 hours 4) | ◎ | ◎ | ◎ | — |
| Ten points mean surface roughness (μ) 5) | 3.8 | 3.5 | 7.2 | 3.1 |

Table 1 (continued)

| | Example 3 | Example 4 | Example 5 | Comparative Example 3 | Comparative Example 4 |
|---|---|---|---|---|---|
| Formulation | | | | | |
| Component (A) | ($A_2$) | ($A_3$) | ($A_1$) | ($A_2$) | ($A_2$) |
| (g) | 400 | 400 | 400 | 400 | 400 |
| Component (B) | ($B_2$) | ($B_2$) | ($B_1$) | ($B_2$) | ($B_2$) |
| (g) | 400 | 400 | 400 | 400 | 400 |
| Component (C) | ($C_2$) | ($C_2$) | ($C_1$) | — | — |
| (g) | 80 | 80 | 48 | — | — |
| Component (D) | $Mn(Ac)_2$ | ($D_1$) | $Co(Ac)_2$ | $Mn(Ac)_2$ | ($D_1$) |
| (g) | 1.25 | 44 | 1.35 | 1.25 | 44 |
| Component (E) | — | — | ($E_1$) | — | — |
| (g) | — | — | 60 | — | — |
| Baking temp. (°C) for 20 minutes | 165 | 165 | 165 | 165 | 165 |
| Film thickness (μ) | 20 | 20 | 20 | 20 | 20 |
| Weight loss upon baking, (%) 1) | 1.1 | 1.1 | 1.0 | 0.6 | 0.6 |
| Film testing 2) | | | | | |
| Pencil hardness | 2H | 2H | 2H | 2H | 2H |
| Solvent resistance 3) | ○ | ○ | ○ | ○ | ○ |
| Corrosion resistance for 500 hours 4) | ◎ | ◎ | ○ | ○ | △ |
| Ten points mean surface roughness (μ) 5) | 3.2 | 3.2 | 3.1 | 5.5 | 6.1 |

Note

1) $$\text{Weight loss} = \frac{W_1 - W_2}{W_1} \times 100$$

$W_1$ = Film weight after drying at 105°C for 3 hours.

$W_2$ = Film weight after baking.

2) According to JIS K-5400.

3) Rubbing test with MIBK impregnated fabric at 50 reciprocations per minutes.

○ No change

△ Dull surface

× Exposure of substrate

4) 5% saline spray test. Judged by the width of rust developed from the cut edge of applied coating film.

◎ less than 1 mm

○ 1-2 mm

△ 2-3 mm

× greater than 3 mm

5) Data measured by a surface roughness tester SURFCOM 550A, Tokyo Seimitsu Co., Ltd.

Example 6

400g of component ($A_1$) produced in Production Example l, 240g of component ($B_1$) produced in Production Example 4, 48g of component ($C_3$) produced in Production Example 7 and l2g of component ($E_2$) produced in Production Example 6 were thoroughly mixed and neutralized with 8.lg of acetic acid with stirring. The mixture was diluted with deionized water to give an aqueous solution having a solid content of 20%.

2,000g of this solution, 4g of carbon black, 20g of basic lead silicate and 2,000g of glass beads were placed in a 5 liter stainless steel beaker and vigorously mixed by a high speed rotary mixer for 2 hours. The mixture was filtered to remove glass beads and the filtrate was diluted to a solid content of l6.5% with deionized water containing 0.32g of manganese acetate calculated as elementary manganese.

Electrodeposition coating was carried out using the resulting coating composition on a zinc phosphate-treated steel plate. The steel plate was used as cathode and a carbon electrode was used as anode. The results obtained are shown in Table 2.

Example 7

The procedure of Example 6 was repeated except that the amount of component ($C_3$) was increased to 96g and manganese acetate was replaced by cobalt acetate. The results obtained are shown in Table 2.

Comparative Example 5

The procedure of Example 6 was repeated except that component ($C_3$) was not incorporated at all. The results obtained are shown in Table 2.

Comparative Example 6

The procedure of Example 6 was repeated except that the amount of component ($C_3$) was increased to 288g. The results obtained are shown in Table 2.

Example 8

400g of component ($A_2$) produced in Production Example 2, 400g of component ($B_2$) produced in Production Example 5, 80g of component ($C_4$) produced in Production Example 8 and 6g of HIDIENE (conjugated fatty acid sold by Soken Kagaku Co., Ltd.) as component ($E_3$) were thoroughly mixed and neutralized with 9.6g of acetic acid with stirring. The mixture was diluted with deionized water to give an aqueous solution having a solid content of 25%.

I,000g of this solution, 2.5g of carbon black, 25g of basic lead silicate and I,000g of glass beads were placed in a 3 liter stainless steel beaker and vigorously mixed by a high speed rotary mixer for 2 hours. The mixture was filtered to remove glass beads and the filtrate was diluted to a solid content of I8% with deionized water containing 0.I3g of manganese acetate calculated as elementary manganese.

Electrodeposition coating was carried out using the resulting coating composition on a zinc phosphate-treated steel plate. The steel plate was used as cathode and a carbon electrode was used as anode. The results obtained are shown in Table 2.

Example 9

400g of component ($A_3$) produced in Production Example 3, 400g of component ($B_2$) produced in Production Example 5, 80g of component ($C_3$) produced in Production Example 7, I5g of component ($E_2$) produced in Production Example 6 and 44g of component ($D_1$) produced in Production Example 9 were thoroughly mixed and neutralized with 9.0g of acetic acid with stirring. The mixture was diluted with deionized water to give an aqueous solution having a solid content of 30%.

I,000g of this solution, 3g of carbon black, 20g of basic lead silicate and I,000g of glass beads were vigorously stirred in a 3 liter stainless steel beaker for 2 hours using a high speed rotary mixer. The mixture was filtered to remove glass beads and the filtrate was diluted to a solid content of I6% with deionized water containing 0.I5g of manganese acetate calculated as elementary manganese.

Electrodeposition coating was carried out using the resulting coating composition on a zinc phosphate-treated steel plate. The steel plate was used as cathode and a carbon electrode was used as anode. The results obtained are shown in Table 2.

Comparative Example 7

The procedure of Example 8 was repeated except that component ($C_4$) was not incorporated at all. The results obtained are shown in Table 2.

Comparative Example 8

The procedure of Example 9 was repeated except that component ($C_3$) was not incorporated at all. The results obtained are shown in Table 2.

Table 2

| | Example 6 | Example 7 | Comparative Example 5 | Comparative Example 6 | Example 8 | Comparative Example 7 | Example 9 | Comparative Example 8 |
|---|---|---|---|---|---|---|---|---|
| **Formulation** | | | | | | | | |
| Component (A) (g) | ($A_1$) 400 | ($A_1$) 400 | ($A_1$) 400 | ($A_1$) 400 | ($A_2$) 400 | ($A_2$) 400 | ($A_3$) 400 | ($A_3$) 400 |
| Component (B) (g) | ($B_1$) 240 | ($B_1$) 240 | ($B_1$) 240 | ($B_1$) 240 | ($B_2$) 400 | ($B_2$) 400 | ($B_2$) 400 | ($B_2$) 400 |
| Component (C) (g) | ($C_3$) 48 | ($C_3$) 96 | — — | ($C_3$) 288 | ($C_4$) 80 | — — | ($C_3$) 80 | — — |
| Component (D) (g) | $Mn(Ac)_2$ 1.4 | $Co(Ac)_2$ 1.4 | $Mn(Ac)_2$ 1.4 | $Mn(Ac)_2$ 1.4 | $Mn(Ac)_2$ 1.4 | $Mn(Ac)_2$ 1.4 | ($D_1$) 44 $Mn(Ac)_2$ 0.7 | ($D_1$) 44 $Mn(Ac)_2$ 0.7 |
| Component (E) (g) | ($E_2$) 12 | ($E_2$) 12 | ($E_2$) 12 | ($E_2$) 12 | ($E_3$) 6 | ($E_3$) 6 | ($E_2$) 15 | ($E_2$) 15 |
| Weight loss upon baking, (%) | 1.0 | 1.4 | 0.6 | 2.5 | 1.1 | 0.5 | 1.1 | 0.6 |
| **Film testing** | | | | | | | | |
| Pencil hardness | 2H | 2H | H | 3H | 2H | H | 2H | H |
| Solvent resistance | ○ | ○ | ○ | △ | ○ | ○ | ○ | ○ |
| Corrosion resistance for 500 hours | ◎ | ◎ | ○ | × | ◎ | ○ | ◎ | ○ |
| Ten points mean surface roughness | 3.9 | 3.6 | 7.2 | 3.3 | 4.0 | 5.5 | 3.9 | 6.1 |

## Claims

1. A cathode-depositing electrodeposition coating composition rendered water-soluble or water-dispersible by neutralization with an organic acid and which comprises an aqueous solution or dispersion

containing:

(A) 100 parts by weight of a reaction product produced by reacting

(1) a polymer having a molecular weight from 500 to 5,000, a carbon-to-carbon double bond content corresponding to an iodine number from 50 to 500 and an oxirane oxygen content from 3 to 12% by weight, with

(2) 30 to 300 millimoles per 100g of said reactant (1) of an amine of the formula:

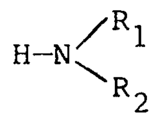

wherein $R_1$ and $R_2$ each represents a $C_1$-$C_{20}$ hydrocarbon radical or corresponding radical substituted by a hydroxyl group, or $R_1$ and $R_2$ represent, taken together with the nitrogen atom, a saturated or unsaturated ring system, or by reacting the aforesaid reaction product of (1) and (2) with

(3) 0 to 200 millimoles per 100g of said reactant (1) of an $\alpha,\beta$-unsaturated carboxylic acid of the formula:

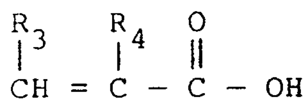

wherein $R_3$ and $R_4$ each represents a hydrogen atom or methyl group, an unsaturated aliphatic acid having a molecular weight from 100 to 350 and a conjugated carbon-to-carbon double bond content of at least 10% by weight, or a mixture thereof;

(B) 10 to 100 parts by weight of a reaction product of

(1) a diglycidyl compound of the formula:

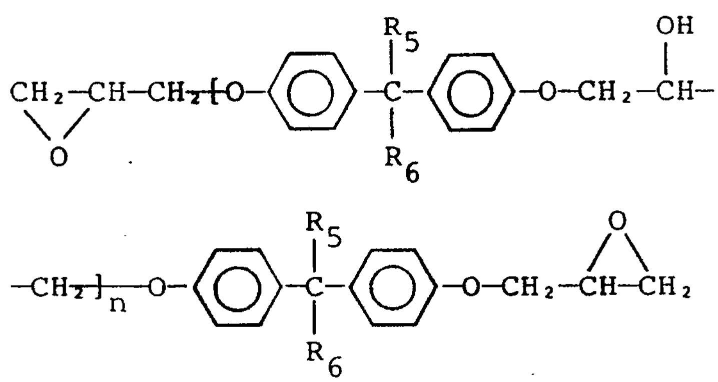

wherein $R_5$ and $R_6$ each represents a hydrogen atom or methyl group, and n is zero or an integer from 1 to 20; and

(2) 1.9 to 2.1 moles per mole of said diglycidyl compound (1) of an $\alpha,\beta$-unsaturated carboxylic acid of the formula:

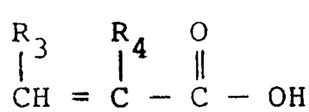

wherein $R_3$ and $R_4$ are as defined above, an unsaturated aliphatic acid having a molecular weight from 100 to 350 and a conjugated carbon-to-carbon double bond content of at least 10% by weight, or a mixture thereof;

(C) 2 to 30 parts by weight of an aminoplast resin or a polyester having a molecular weight from 500

to 5,000 and produced by reacting a low molecular weight polybasic organic acid component with a low molecular weight polyol component or a monoepoxy compound; and

(D) 0.005 to 1.0 parts by weight calculated as elementary metal of manganese dioxide or an organic acid salt of manganese, cobalt, copper or lead; and

(E) 0 to 30 parts by weight of a $C_6$-$C_{24}$ unsaturated monocarboxylic acid, a dimer thereof, or a reaction product produced by reacting (l) a polymer having a molecular weight of 500 to 5,000 and a carbon-to-carbon double bond content corresponding to an iodine number of 50 to 500 with (2) 40 to 400 millimoles per l00g of said polymer (l) of an $\alpha,\beta$-unsaturated dicarboxylic acid anhydride of the formula:

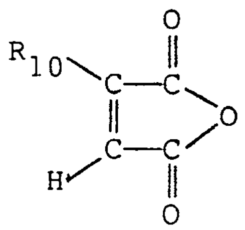

wherein $R_{10}$ represents a hydrogen atom, a halogen atom or methyl group, or a half ester or half amide of the aforesaid reaction product.

2. The coating composition of Claim l, wherein said reactant (l) of said component (A) is an epoxidized liquid polybutadiene.

3. The coating composition of Claim 2, wherein said reactant (2) of said component (A) is dimethylamine or methyl ethanolamine.

4. The coating composition of Claim 3, wherein said reactant (3) of said component (A) is acrylic acid, dehydrated castor oil fatty acid or a mixture thereof.

5. The coating composition of Claim l, wherein said reactant (l) of said component (B) is a bisphenol A epoxy resin.

6. The coating composition of Claim 5, wherein said reactant (2) of said component (B) is acrylic acid, dehydrated castor oil fatty acid or a mixture thereof.

7. The coating composition of Claim l, wherein said component (C) is methylolmelamine or an ether thereof with a $C_1$-$C_6$ alkanol

8. The coating composition of Claim l, wherein said component (C) s a polyester having a molecular weight of 500 to 5,000 produced by reacting a polybasic carboxylic acid with an aliphatic polyol or a monoepoxy compound.

9. The coating composition of Claim l, wherein said component (D) is manganese acetate, cobalt acetate or manganese salt of maleinized polybutadiene.

10. The coating composition of Claim l, wherein said component (E) is dehydrated castor oil fatty acid, conjugated unsaturated fatty acid, maleinized polybutadiene or a half ester thereof.

11. The coating composition of Claim l, wherein the liquid medium of said aqueous solution or dispersion contains a water-miscible organic solvent.

12. The coating composition of Claim l, wherein said component (A) is neutralized with an organic acid.

13. The coating composition of Claim l further comprising a pigment.

14. The use of a coating composition as claimed in any one of the preceding claims in electrodeposition.

**15.** An article when coated with a coating composition as claimed in any one of claims I - I3.

**Revendications**

**1.** Composition de revêtement par électrodéposition cathodique rendu soluble dans l'eau ou dispersable dans l'eau par neutralisation avec un acide organique, et qui comprend une solution ou dispersion aqueuse contenant :

(A) 100 parties en poids d'un produit de réaction préparé en faisant réagir

(1) un polymère ayant une masse moléculaire de 500 à 5000, une teneur en doubles liaisons carbone-carbone correspondant à un indice d'iode de 50 à 500 et une teneur en oxygène d'oxirane de 3 à 12 % en poids, avec

(2) 30 à 300 millimoles pour 100 g de ce réactif (1) d'une amine répondant à la formule:

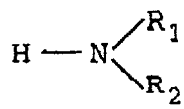

dans laquelle $R_1$ et $R_2$ représentent chacun un radical hydrocarboné $C_1$-$C_2$ ou un radical correspondant substitué par un groupe hydroxyle, ou bien $R_1$ et $R_2$ représentent, conjointement avec l'atome d'azote, un système cyclique saturé ou insaturé, ou en faisant réagir le produit de réaction de (1) et de (2) ci-dessus avec

(3) 0 à 200 millimoles pour 100 g de ce ce réactif (1) d'un acide carboxylique $\alpha,\beta$-insaturé répondant à la formule:

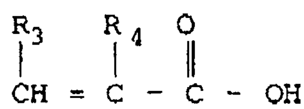

dans laquelle $R_3$ et $R_4$ représentent chacun un atome d'hydrogène ou un groupe méthyle, un acide aliphatique insaturé ayant une masse moléculaire de 100 à 350 et une teneur en doubles liaisons carbone-carbone conjuguées d'au moins 10 % en poids ou un mélange de ceux-ci;

(B) 10 à 100 parties en poids d'un produit de réaction

(1) d'un composé diglycidylique répondant à la formule:

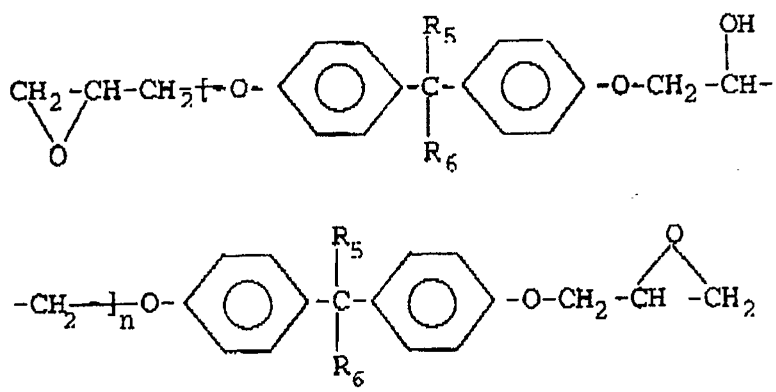

dans laquelle $R_5$ et $R_6$ représentent chacun un atome d'hydrogène ou un groupe méthyle et n est zéro ou un entier de 1 à 20; et

(2) de 1,9 à 2,1 moles par mole de ce composé diglycidylique (1) d'un acide carboxylique $\alpha,\beta$-insaturé répondant à la formule:

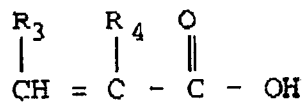

dans laquelle $R_3$ et $R_4$ sont tels que définis ci-dessus, d'un acide aliphatique ayant une masse moléculaire de 100 à 350 et une teneur en double liaison carbone-carbone conjuguée d'au moins 10 % en poids, ou d'un mélange de ceux-ci;

(C) 2 à 30 parties en poids d'une résine aminoplaste ou d'un polyester ayant une masse moléculaire de 500 à 5000, et préparée en faisant réagir un constituant polyacide organique de faible masse moléculaire avec un constituant polyol de faible masse moléculaire ou un composé monoépoxydé; et

(D) 0,005 à 1,0 partie en poids, calculées en métal élémentaire, de dioxyde de manganèse ou d'un sel d'acide organique du manganèse, du cobalt, du cuivre ou du plomb; et

(E) 0 à 30 parties en poids d'un acide monocarboxylique insaturé en $C_6$ à $C_{24}$, d'un dimère de celui-ci ou d'un produit de réaction préparé en faisant réagir (1) un polymère ayant une masse moléculaire de 500 à 5000 et une teneur en doubles liaisons carbone-carbone correspondant à un indice d'iode de 50 à 500 avec (2) 40 à 400 millimoles pour 100 g de ce polymère (1) d'un anhydride d'acide dicarboxylique $\alpha,\beta$-insaturé répondant à la formule:

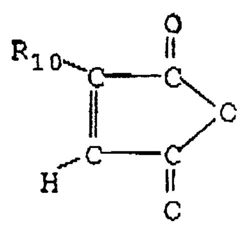

dans laquelle $R_{10}$ représente un atome d'hydrogène, un atome d'halogène ou un groupe méthyle, ou un hémiester ou un hémiamide du produit de réaction précité.

2. Composition de revêtement de la revendication 1, dans laquelle ce réactif (1) de ce constituant (A) est un polybutadiène liquide époxydé.

3. Composition de revêtement de la revendication 2, dans laquelle ce réactif (2) de ce constituant (A) est la diméthylamine ou la méthyléthanolamine.

4. Composition de revêtement de la revendication 3, dans laquelle ce réactif (3) de ce constituant (A) est l'acide acrylique, l'acide gras de l'huile de ricin déshydratée ou un mélange de ceux-ci.

5. Composition de revêtement de la revendication 1, dans laquelle ce réactif 1 de ce constituant (B) est une résine époxy au bisphénol A.

6. Composition de revêtement de la revendication 5, dans laquelle ce réactif (2) de ce constituant (B) est l'acide acrylique, l'acide gras de l'huile de ricin déshydratée ou un mélange de ceux-ci.

7. Composition de revêtement de la revendication 1, dans laquelle ce constituant (C) est la méthylolmélamine ou un éther de celle-ci avec un alcanol en $C_1$-$C_6$.

8. Composition de revêtement de la revendication 1, dans laquelle ce constituant (C) est un polyester ayant une masse moléculaire de 500 à 5000, préparé en faisant réagir un polyacide carboxylique avec un polyol aliphatique ou un composé monoépoxydé.

9. Composition de revêtement de la revendication 1, dans laquelle ce constituant (D) est l'acétate de manganèse, l'acétate de cobalt, ou un sel de manganèse du polybutadiène maléinisé.

**10.** Composition de revêtement de la revendication 1, dans laquelle ce constituant (E) est l'acide gras de l'huile de ricin déshydratée, un acide gras insaturé conjugué, le polybutadiène maléinisé ou un hémiester de celui-ci.

**11.** Composition de revêtement de la revendication 1, dans laquelle le milieu liquide de cette solution ou dispersion aqueuse contient un solvant organique miscible à l'eau.

**12.** Composition de revêtement de la revendication 1, dans laquelle ce constituant (A) est neutralisé par un acide organique.

**13.** Composition de revêtement de la revendication 1, comprenant en outre un pigment.

**14.** Utilisation d'une composition de revêtement selon l'une quelconque des revendications précédentes en électrodéposition.

**15.** Article lorsqu'il est revêtu par une composition de revêtement telle que revendiquée dans l'une quelconque des revendications 1 à 13.

**Ansprüche**

**1.** Kathodisch abscheidbare Elektrotauchlack-Zusammensetzung, die durch Neutralisation mit einer organischen Säure wasserlöslich oder in Wasser dispergierbar gemacht ist, und eine wässrige Lösung oder Dispersion umfaßt, die enthält:

(A) 100 Gewichtsteile eines Reaktionsproduktes erhältlich durch Umsetzung von

(1) einem Polymer mit einem Molekulargewicht von 500 bis 5000, einem Kohlenstoff-Kohlenstoff Doppelbindungsgehalt, der einer Jodzahl von 50 bis 500 entspricht und einem Oxiran-Sauerstoffgehalt von 3 bis 12 Gew.-%, mit

(2) 30 bis 300 Millimol pro 100 g des Reaktanten (1) eines Amins der allgemeinen Formel:

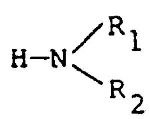

worin $R_1$ und $R_2$ jeweils einen $C_1$-$C_{20}$- Kohlenwasserstoffrest oder einen entsprechenden, mit einer Hydroxylgruppe substituierten Rest bedeuten, oder

$R_1$ und $R_2$ zusammen mit dem Stickstoffatom ein gesättigtes oder ungesättigtes Ringsystem bedeuten;

oder durch Umsetzung des oben erwähnten Reaktionsproduktes aus (1) und (2) mit

(3) 0 bis 200 Millimol pro 100 g des Reaktanten (1) einer $\alpha,\beta$-ungesättigten Carbonsäure der allgemeinen Formel:

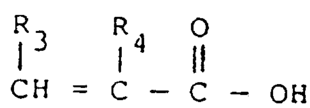

worin $R_3$ und $R_4$ jeweils ein Wasserstoffatom oder eine Methylgruppe bedeuten, einer ungesättigten aliphatischen Säure mit einem Molekulargewicht von 100 bis 350 und einem Gehalt an konjugierten Kohlenstoff-Kohlenstoff-Doppelbindungen von wenigstens 10 Gew.-% oder mit einem Gemisch davon;

(B) 10 bis 100 Gewichtsteile eines Reaktionsproduktes von

(1) einer Diglycidyl-Verbindung der allgemeinen Formel:

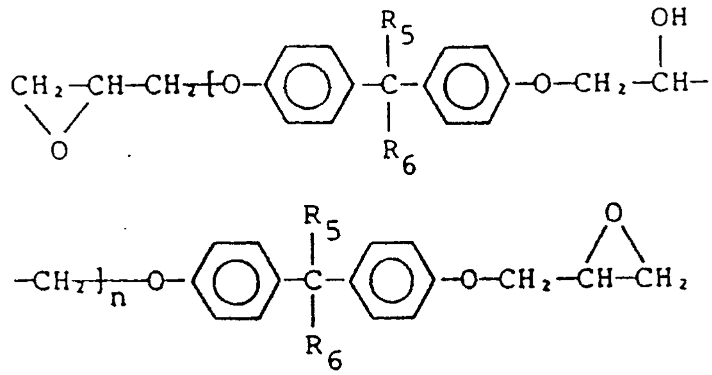

worin $R_5$ und $R_6$ jeweils ein Wasserstoffatom oder eine Methylgruppe bedeuten und n für 0 oder einen ganzzahligen Wert von 1 bis 20 steht;
und
(2) 1,9 bis 2,1 Mol je Mol der Diglycidyl-Verbindung (1) einer $\alpha,\beta$-ungesättigten Carbonsäure der allgemeinen Formel:

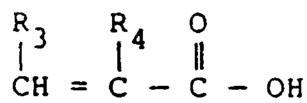

worin $R_3$ und $R_4$ die oben angegebenen Bedeutungen besitzen, einer ungesättigten aliphatischen Säure mit einem Molekulargewicht von 100 bis 350 und einem Gehalt an konjugierten Kohlenstoff-Kohlenstoff-Doppelbindungen von wenigstens 10 Gew.-% oder einem Gemisch davon;
(C) 2 bis 30 Gewichtsteile eines Aminoplastharzes oder eines Polyesters mit einem Molekulargewicht von 500 bis 5000, erhältlich durch Umsetzung einer niedermolekularen mehrbasigen organischen Säurekomponente mit einer niedermolekularen Polyolkomponente oder einer Monoepoxyverbindung; und
(D) bezogen auf elementares Metall, 0,005 bis 1,0 Gewichtsteile Mangandioxyd oder ein Salz von Mangan, Kobalt, Kupfer oder Blei mit einer organischen Säure; und
(E) 0 bis 30 Gewichtsteile einer ungesättigten $C_6$-$C_{24}$-Monocarbonsäure, eines Dimers davon, oder eines Reaktionsproduktes erhältlich durch Umsetzung von
(1) einem Polymer mit einem Molekulargewicht von 500 bis 5000 und einem Kohlenstoff-Kohlenstoff-Doppelbindungsgehalt, entsprechend einer Jodzahl von 50 bis 500 mit
(2) 40 bis 400 Millimol je 100 g des Polymers (1) eines $\alpha,\beta$-ungesättigten Dicarbonsäureanhydrids der allgemeinen Formel:

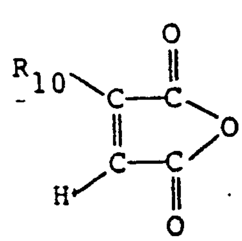

worin $R_{10}$ ein Wasserstoffatom, ein Halogenatom oder eine Methylgruppe bedeutet, oder ein Halbesters oder eines Halbamids des genannten Reaktionsproduktes.

2. Zusammensetzung nach Anspruch 1, worin der Reaktant (1) der Komponente (A) ein epoxidiertes flüssiges Polybutadien ist.

3. Zusammensetzung nach Anspruch 2, worin der Reaktant (2) der Komponente (A) Dimethylamin oder Methylethanolamin ist.

4. Zusammensetzung nach Anspruch 3, worin der Reaktant (3) der Komponente (A) Acrylsäure, dehydrierte Kastorölfettsäure oder ein Gemisch davon ist.

5. Zusammensetzung nach Anspruch 1, worin der Reaktant (1) der Komponente (B) ein Bisphenol A Epoxyharz ist.

6. Zusammensetzung nach Anspruch 5, worin der Reaktant (2) der Komponente (B) Acrylsäure, dehydrierte Kastorölfettsäure oder ein Gemisch davon ist.

7. Zusammensetzung nach Anspruch 1, worin die Komponente (C) Methylolmelamin oder ein Äther davon mit einem $C_1$-$C_6$-Alkanol ist.

8. Zusammensetzung nach Anspruch 1, worin die Komponente (C) ein Polyester mit einem Molekulargewicht von 500 bis 5000 ist, erhältlich durch Umsetzung einer mehrbasigen Carbonsäure mit einem aliphatischen Polyol oder einer Monoepoxyverbindung.

9. Zusammensetzung nach Anspruch 1, worin die Komponente (D) Manganacetat, Kobaltacetat oder ein Mangansalz von maleinisiertem Polybutadien ist.

10. Zusammensetzung nach Anspruch 1, worin die Komponente (E) dehydrierte Kastorölfettsäure, eine konjugierte ungesättigte Fettsäure, maleinisiertes Polybutadien oder ein Halbester davon ist.

11. Zusammensetzung nach Anspruch 1, worin das flüssige Medium der wässrigen Lösung oder Dispersion ein mit Wasser mischbares organisches Lösungsmittel enthält.

12. Zusammensetzung nach Anspruch 1, worin die Komponente (A) mit einer organischen Säure neutralisiert ist.

13. Zusammensetzung nach Anspruch 1, die außerdem ein Pigment umfaßt.

14. Verwendung einer Zusammensetzung nach einem der vorhergehenden Ansprüche zur Elektroabscheidung.

15. Gegenstand, beschichtet mit einer Zusammensetzung nach einem der Ansprüche 1 bis 13.